(19) Europäisches Patentamt
European Patent Office
Office européen des brevets

(11) **EP 4 768 460 A1**

(12) **EUROPEAN PATENT APPLICATION**
published in accordance with Art. 153(4) EPC

(43) Date of publication:
**01.07.2026 Bulletin 2026/27**

(21) Application number: **24856493.2**

(22) Date of filing: **21.08.2024**

(51) International Patent Classification (IPC):
**C04B 35/596** (2006.01) **F16C 19/06** (2006.01)
**F16C 33/32** (2006.01)

(52) Cooperative Patent Classification (CPC):
**C04B 35/584; F16C 19/06; F16C 33/32**

(86) International application number:
**PCT/JP2024/029706**

(87) International publication number:
**WO 2025/041805 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.08.2023 JP 2023136454**

(71) Applicant: **Niterra Materials Co., Ltd.
Yokohama-shi, Kanagawa 235-0032 (JP)**

(72) Inventors:
• **YUASA, Akimasa
Yokohama-shi, Kanagawa 235-0032 (JP)**

• **HOUTSUKI, Naoto
Yokohama-shi, Kanagawa 235-0032 (JP)**
• **ASO, Rena
Yokohama-shi, Kanagawa 235-0032 (JP)**
• **TAKEUCHI, Yuta
Yokohama-shi, Kanagawa 235-0032 (JP)**
• **AOKI, Katsuyuki
Yokohama-shi, Kanagawa 235-0032 (JP)**

(74) Representative: **Henkel & Partner mbB
Patentanwaltskanzlei, Rechtsanwaltskanzlei
Maximiliansplatz 21
80333 München (DE)**

(54) **SILICON NITRIDE SINTERED BODY AND WEAR-RESISTANT MEMBER USING SAME**

(57)    The present invention provides a silicon nitride sintered body that exhibits excellent durability even when used in an environment where torque changes. According to an embodiment, in an XRD analysis result of an arbitrary cross section of a silicon nitride sintered body, when the highest peak intensities corresponding to a hexagonal $\alpha$-SiAlON crystal that are detected at $20.5 \pm 0.3°$, $22.8 \pm 0.3°$, $34.3 \pm 0.3°$, and $38.7 \pm 0.3°$ are represented respectively by $I20.5°$, $I22.8°$, $I34.3°$, and $I38.7°$, the highest peak intensities corresponding to a $\beta$-$Si_3N_4$ crystal that are detected at $33.6 \pm 0.3°$ and $36.1 \pm 0.3°$ are represented respectively by $I33.6°$ and $I36.1°$, and the highest peak intensities corresponding to an $R_2Si_3O_3N_4$ crystal (where R is a rare earth element) that are detected at $33.6 \pm 0.3°$ and $36.1 \pm 0.3°$ are represented respectively by $I31.8°$ and $I37.2°$, $0.001 \leq (I20.5°+I22.8°+I34.3°+I38.7°)/(I33.6°+I36.1°) \leq 0.300$ is satisfied, and $0.002 \leq (I31.8°+I37.2°)/(I33.6°+I36.1°) \leq 0.100$ is satisfied.

FIG. 1

EP 4 768 460 A1

## Description

[Technical Field]

Embodiments described herein relate generally to a silicon nitride sintered body and a wear-resistant member using a silicon nitride sintered body.

[Background Art]

Silicon nitride sintered bodies have excellent mechanical properties (hardness, toughness, strength, etc.). Taking advantage of such characteristics, silicon nitride sintered bodies are used in wear-resistant members and substrates for semiconductor devices. Wear-resistant members include bearing balls, friction stir welding tool members, engine parts, etc. In recent years, demand has been increasing for silicon nitride sintered bodies used in bearing balls of electric vehicle motors.

The use of inexpensive silicon nitride powders is being tried in the mass production of silicon nitride sintered bodies. Silicon nitride powders are raw materials of silicon nitride sintered bodies, and are made mainly by direct nitriding or imide decomposition. A silicon nitride powder manufactured with imide decomposition has few impurities, but is expensive. On the other hand, direct nitriding is inexpensive compared to imide decomposition, but results in more impurities in the silicon nitride powder.

For example, JP 5732037 (Patent Literature 1) discusses a silicon nitride powder manufactured by direct nitriding. The silicon nitride powder is used in a silicon nitride sintered body. According to Patent Literature 1, the silicon nitride powder includes not less than 10 wtppm and not more than 3,500 wtppm of impurity iron. The silicon nitride sintered body described in Patent Literature 1 has a Vickers hardness HV of about 1,450, and the mechanical strength is insufficient.

In JP 6334413 (Patent Literature 2), the XRD peak ratio of hexagonal $\alpha$-SiAlON crystals to $\beta$-Si$_3$N$_4$ crystals is controlled. In Patent Literature 2, the XRD peak ratio of at least one of Y$_2$Si$_3$O$_{12}$N (the H-phase), YSiO$_2$N (the K-phase), or Y$_2$Si$_3$O$_3$N$_4$ is controlled. According to Patent Literature 2, the Vickers hardness HV of the silicon nitride sintered body is about 1,500 to 1,600.

[Prior Art Documents]

[Patent Literature]

Patent Literature 1: JP 5732037
Patent Literature 2: JP 6334413
Patent Literature 3: JP 5362758

[Non-Patent Literature]

Non-Patent Literature 1: Toshiba Review, Vol. 60, No. 11, (2005), p. 41-44

[Summary of Invention]

[Problem to be Solved by the Invention]

For example, Toshiba Review, Vol. 60, No. 11 (2005), p. 41-44 (Non-Patent Literature 1) discusses a motor used in an electric vehicle (EV) or hybrid electric vehicle (HEV). According to Non-Patent Literature 1, the maximum rotational speed of a passenger car motor is said to reach 10,000 to 15,000 rpm. An electric vehicle repeatedly runs and stops. Therefore, the rotational speed of the motor changes within the range of 0 to 15,000 rpm.

As described in Non-Patent Literature 1, changes in rotational speed lead to changes in torque. In mechanics, torque is the moment of a force around a fixed rotation axis that acts with the rotation axis at the center. A change of the rotational speed is a change of the rotational speed per unit time. The torque (i.e., the stress) applied to the bearing ball also changes as the rotational speed changes. The bearing ball described in Patent Literature 1 or Patent Literature 2 sometimes had degraded durability when used in an environment of changing torque.

A silicon nitride sintered body according to an embodiment is directed to solve such problems, and is directed to a silicon nitride sintered body having excellent durability even when used in an environment of changing torque.

[Means for Solving the Problem]

According to an embodiment, XRD analysis results of any cross section of a silicon nitride sintered body satisfy $0.001 \leq (I_{20.5°} + I_{22.8°} + I_{34.3°} + I_{38.7°})/(I_{33.6°} + I_{36.1°}) \leq 0.300$ and satisfy $0.002 \leq (I_{31.8°} + I_{37.2°})/(I_{33.6°} + I_{36.1°}) \leq 0.100$. $I_{20.5°}$, $I_{22.8°}$, $I_{34.3°}$, and $I_{38.7°}$ are maximum peak intensities corresponding to hexagonal $\alpha$-SiAlON crystals detected respectively at $20.5 \pm 0.3°$, $22.8 \pm 0.3°$, $34.3 \pm 0.3°$, and $38.7 \pm 0.3°$. $I_{33.6°}$ and $I_{36.1°}$ are maximum peak intensities corresponding to $\beta$-$Si_3N_4$ crystals detected respectively at $33.6 \pm 0.3°$ and $36.1 \pm 0.3°$. $I_{31.8°}$ and $I_{37.2°}$ are maximum peak intensities corresponding to $R_2Si_3O_3N_4$ crystals detected respectively at $31.8 \pm 0.3°$ and $37.2 \pm 0.3°$. R is a rare-earth element.

[Brief Description of Drawings]

[FIG. 1] FIG. 1 shows an example of XRD analysis results of a silicon nitride sintered body according to an embodiment.
[FIG. 2] FIG. 2 shows an example of a bearing ball according to an embodiment.
[FIG. 3] FIG. 3 shows an example of a bearing.

[Description of Embodiments]

According to an embodiment, XRD analysis results of any cross section of a silicon nitride sintered body satisfy $0.001 \leq (I_{20.5°} + I_{22.8°} + I_{34.3°} + I_{38.7°})/(I_{33.6°} + I_{36.1°}) \leq 0.300$ and satisfy $0.002 \leq (I_{31.8°} + I_{37.2°})/(I_{33.6°} + I_{36.1°}) \leq 0.100$. $I_{20.5°}$, $I_{22.8°}$, $I_{34.3°}$, and $I_{38.7°}$ are maximum peak intensities corresponding to hexagonal $\alpha$-SiAlON crystals detected respectively at $20.5 \pm 0.3°$, $22.8 \pm 0.3°$, $34.3 \pm 0.3°$, and $38.7 \pm 0.3°$. $I_{33.6°}$ and $I_{36.1°}$ are maximum peak intensities corresponding to $\beta$-$Si_3N_4$ crystals detected respectively at $33.6 \pm 0.3°$ and $36.1 \pm 0.3°$. $I_{31.8°}$ and $I_{37.2°}$ are maximum peak intensities corresponding to $R_2Si_3O_3N_4$ crystals detected respectively at $31.8 \pm 0.3°$ and $37.2 \pm 0.3°$. R is a rare-earth element.

First, the conditions under which the XRD analysis is performed will be described. The XRD apparatus is the D8 ADVANCE manufactured by BRUKER, or an apparatus having equivalent performance. The measurement surface is any cross section of the sintered body. A polished surface that is polished to a surface roughness Ra of not more than 1 $\mu$m is used as the measurement surface. A Cu target (Cu-K$\alpha$) is used in the XRD analysis; and the measurements are performed using a tube voltage of 40 kV, a tube current of 40 mA, a scan speed of 2.0°/min, a slit (RS) of 0.15 mm, and a scanning range ($2\theta$) of 10° to 60°. A wider range may be measured as long as the scanning range ($2\theta$) includes 10° to 60°. The most intense peak refers to a maximum peak intensity among the peak intensities appearing within a specific range.

The scanning range is set to 10° to 60° because intense peaks of the silicon nitride sintered body appear within this range. The silicon nitride sintered body according to the embodiment may have other peaks within the range of 10° to 60° in addition to the peaks specified in the specification. The silicon nitride sintered body according to the embodiment also may have peaks outside the range of 10° to 60°.

The maximum peak intensities detected at $20.5 \pm 0.3°$, $22.8 \pm 0.3°$, $34.3 \pm 0.3°$, and $38.7 \pm 0.3°$ are respectively taken as $I_{20.5°}$, $I_{22.8°}$, $I_{34.3°}$, and $I_{38.7°}$. The peaks that are detected in these ranges correspond to hexagonal $\alpha$-SiAlON crystals. It is sufficient for a peak to be present in at least one range among $20.5 \pm 0.3°$, $22.8 \pm 0.3°$, $34.3 \pm 0.3°$, and $38.7 \pm 0.3°$. More favorably, peaks are present in all of $20.5 \pm 0.3°$, $22.8 \pm 0.3°$, $34.3 \pm 0.3°$, and $38.7 \pm 0.3°$. When a peak is not detected in one range, the maximum peak intensity I in the one range is zero.

The peak intensities are affected not only by the amount present and the crystal composition, but also the crystallite size and orientation. When these four peaks are detected, it indicates not only good crystallinity but also good orientation of hexagonal $\alpha$-SiAlON crystals. Peaks that correspond to hexagonal $\alpha$-SiAlON crystals may be present in ranges other than the four ranges of $20.5 \pm 0.3°$, $22.8 \pm 0.3°$, $34.3 \pm 0.3°$, and $38.7 \pm 0.3°$. Herein, "orientation" refers to the crystal dispersibility inside the sintered body. By dispersing the crystals uniformly in various directions inside the sintered body, various characteristics of the silicon nitride sintered body can be improved.

The maximum peak intensities detected at $33.6 \pm 0.3°$ and $36.1 \pm 0.3°$ are respectively taken as $I_{33.6°}$ and $I_{36.1°}$. The peaks that are detected in these ranges correspond to $\beta$-$Si_3N_4$ crystals. Peaks are detected at $33.6 \pm 0.3°$ and $36.1 \pm 0.3°$ when $\beta$-$Si_3N_4$ crystals are present in the sintered body. In other words, when peaks are detected at $33.6 \pm 0.3°$ and $36.1 \pm 0.3°$, it means that $\beta$-$Si_3N_4$ crystals are present in the sintered body. Peaks that correspond to $\beta$-$Si_3N_4$ crystals may be present in ranges other than the two ranges of $33.6 \pm 0.3°$ and $36.1 \pm 0.3°$. The reason for using the two peak intensities of $I_{33.6°}$ and $I_{36.1°}$ is to relax the effects of peak intensity changes due to crystal orientation.

The maximum peak intensities detected at $31.8 \pm 0.3°$ and $37.2 \pm 0.3°$ are respectively taken as $I_{31.8°}$ and $I_{37.2°}$. The peaks that are detected in these ranges correspond to $R_2Si_3O_3N_4$ crystals. "R" in $R_2Si_3O_3N_4$ crystals represents a rare-earth element. The rare-earth element is at least one selected from the group consisting of yttrium and lanthanoid elements. $R_2Si_3O_3N_4$ also is referred to as melilite. It is sufficient for at least one of $I_{31.8°}$ or $I_{37.2°}$ to be detected, and it is more favorable for both to be detected. These two peaks being detected indicates not only that the crystallinity of the $R_2Si_3O_3N_4$ crystals is good, but also that the orientation of the $R_2Si_3O_3N_4$ crystals is good.

In the silicon nitride sintered body according to the embodiment, the XRD peaks based on hexagonal $\alpha$-SiAlON crystals, $\beta$-$Si_3N_4$ crystals, and $R_2Si_3O_3N_4$ crystals satisfy the following Formulas 1 and 2.

**Formula** 1: $0.001 \le (I_{20.5°} + I_{22.8°} + I_{34.3°} + I_{38.7°})/(I_{33.6°} + I_{36.1°}) \le 0.300$      Formula 1:

$$\text{Formula 2: } 0.002 \le (I_{31.8°} + I_{37.2°})/(I_{33.6°} + I_{36.1°}) \le 0.100$$

Formula 1 represents the condition of the ratio of the maximum peak intensities based on hexagonal $\alpha$-SiAlON crystals relative to the maximum peak intensities based on $\beta$-$Si_3N_4$ crystals. The ratio being not less than 0.001 indicates that hexagonal $\alpha$-SiAlON crystals and $\beta$-$Si_3N_4$ crystals are present. The ratio being not more than 0.300 indicates that $\beta$-$Si_3N_4$ crystals are present and the amount of hexagonal $\alpha$-SiAlON crystals relative to the amount of $\beta$-$Si_3N_4$ crystals is sufficiently small.

Many hexagonal $\alpha$-SiAlON crystals have an aspect ratio of less than 2. Many $\beta$-$Si_3N_4$ crystals have long columnar shapes having an aspect ratio of not less than 2. The presence of hexagonal $\alpha$-SiAlON crystals in the gaps between the long columnar $\beta$-$Si_3N_4$ crystals is effective to improve the characteristics of the sintered body. Crystal grains that have different aspect ratios are mixed in a structure in which hexagonal $\alpha$-SiAlON crystals and $\beta$-$Si_3N_4$ crystals are mixed. For hexagonal $\alpha$-SiAlON crystals, the maximum peak intensities $I_{20.5°}$, $I_{22.8°}$, $I_{34.3°}$, and $I_{38.7°}$ are affected not only by the amount present, but also by the orientation. Formula 1 being satisfied indicates that the orientation of the hexagonal $\alpha$-SiAlON crystals and the orientation of the $\beta$-$Si_3N_4$ crystals are good. By hexagonal $\alpha$-SiAlON crystals being present with good orientation in the gaps of the long columnar $\beta$-$Si_3N_4$ crystals, the wear resistance of the sintered body can be improved. $\alpha$-SiAlON crystals also may have a cubic crystal structure. In the silicon nitride sintered body according to the embodiment, it is favorable for XRD peaks based on cubic $\alpha$-SiAlON crystals not to be detected.

If the ratio $(I_{20.5°} + I_{22.8°} + I_{34.3°} + I_{38.7°})/(I_{33.6°} + I_{36.1°})$ is less than 0.001, the amount of hexagonal $\alpha$-SiAlON crystals relative to the amount of $\beta$-$Si_3N_4$ crystals is insufficient. If the ratio is greater than 0.300, the amount of $\beta$-$Si_3N_4$ crystals relative to the amount of hexagonal $\alpha$-SiAlON crystals is insufficient. As a result, the characteristics of the sintered body may degrade. It is therefore favorable for the ratio $(I_{20.5°} + I_{22.8°} + I_{34.3°} + I_{38.7°})/(I_{33.6°} + I_{36.1°})$ to be within the range of not less than 0.001 and not more than 0.300, and more favorably within the range of not less than 0.010 and not more than 0.100.

When the cross section of the silicon nitride sintered body is observed with a scanning electron microscope (SEM), there are cases where the aspect ratio of the $\beta$-$Si_3N_4$ crystals appears to be less than 2 due to the orientation direction. There are also cases where the aspect ratio of the hexagonal $\alpha$-SiAlON crystals present in the gaps between the $\beta$-$Si_3N_4$ crystals appears to be not less than 2. Based on only a SEM photograph of the cross section, it is difficult to discriminate between hexagonal $\alpha$-SiAlON crystals and $\beta$-$Si_3N_4$ crystals and determine the crystal orientations of the hexagonal $\alpha$-SiAlON crystals and the $\beta$-$Si_3N_4$ crystals. Therefore, the detection of XRD peaks is effective to evaluate the orientation of the hexagonal $\alpha$-SiAlON crystals and the orientation of the $\beta$-$Si_3N_4$ crystals.

Formula 2 represents the condition of the ratio of the maximum peak intensities based on $R_2Si_3O_3N_4$ crystals relative to the maximum peak intensities based on the $\beta$-$Si_3N_4$ crystals. Hereinafter, $R_2Si_3O_3N_4$ crystals also are referred to as melilite crystals. Formula 2 being satisfied indicates that both melilite crystals and $\beta$-$Si_3N_4$ crystals are present inside the sintered body. For melilite crystals, the maximum peak intensities $I_{31.8°}$ and $I_{37.2°}$ also are affected by the orientation. Formula 2 being satisfied indicates that the orientation is good for both melilite crystals and $\beta$-$Si_3N_4$ crystals.

Melilite crystals are present at the grain boundaries of the crystal structure made by the hexagonal $\alpha$-SiAlON crystals and the $\beta$-$Si_3N_4$ crystals. Formula 2 being satisfied indicates that the amount present, crystallinity, and orientation of the melilite crystals are good. The wear resistance of the silicon nitride sintered body can be further improved thereby.

If the ratio $(I_{31.8°} + I_{37.2°})/(I_{33.6°} + I_{36.1°})$ is less than 0.002, the amount of melilite crystals relative to the amount of $\beta$-$Si_3N_4$ crystals is insufficient. If the ratio of Formula 2 is greater than 0.100, the amount of $\beta$-$Si_3N_4$ crystals relative to the amount of melilite crystals is insufficient. As a result, the characteristics of the sintered body may degrade. It is therefore favorable for the ratio $(I_{31.8°} + I_{37.2°})/(I_{33.6°} + I_{36.1°})$ to be within the range of not less than 0.002 and not more than 0.100, and more favorably within the range of not less than 0.020 and not more than 0.080.

The XRD analysis of any cross section of the silicon nitride sintered body according to the embodiment satisfies both Formulas 1 and 2. In other words, the silicon nitride sintered body according to the embodiment satisfies both Formulas 1 and 2 no matter which cross section is analyzed.

The maximum peak intensities detected at $19.1\pm0.3°$, $31.0\pm0.3°$, and $32.5\pm0.3°$ are respectively taken as $I_{19.10}$, $I_{31.0°}$, and $I_{32.5°}$. The peaks detected in these ranges correspond to $R_4Al_2O_9$ crystals (R being a rare-earth element). It is sufficient for a peak to be present in at least one range among $19.1\pm0.3°$, $31.0\pm0.3°$, and $32.5\pm0.3°$. Peaks that

correspond to $R_4Al_2O_9$ crystals may be present in ranges other than the three ranges of $19.1\pm0.3°$, $31.0\pm0.3°$, and $32.5\pm0.3°$. It is favorable for XRD peaks based on $R_4Al_2O_9$ crystals and $\beta$-$Si_3N_4$ crystals to satisfy the following Formula 3.

$$\text{Formula 3: } 0 \leq (I_{19.1°} + I_{31.0°} + I_{32.5°})/(I_{33.6°} + I_{36.1°}) \leq 0.100$$

R of $R_4Al_2O_9$ represents a rare-earth element. The rare-earth element is at least one selected from the group consisting of yttrium and lanthanoid elements. XRD peaks being detected at $19.1\pm0.3°$, $31.0\pm0.3°$, and $32.5\pm0.3°$ indicates that $R_4Al_2O_9$ is present as a crystal. $R_4Al_2O_9$ crystals also are referred to as YAM crystals. Herein, "YAM crystal" also includes cases where "R" is an element other than yttrium.

Formula 3 being satisfied indicates that the ratio of the amount of YAM crystals relative to the amount of $\beta$-$Si_3N_4$ crystals is suppressed. If the ratio $(I_{19.1°} + I_{31.0°} + I_{32.5°})/(I_{33.6°} + I_{36.1°})$ is greater than 0.100, YAM crystals are too plentiful relative to $\beta$-$Si_3N_4$ crystals. In such a case, there is a possibility that it may become difficult to obtain the effects of increased strength, increased wear resistance, etc., caused by the $\beta$-$Si_3N_4$ crystals.

A YAM crystal is a rare-earth aluminum oxide that is formed by a reaction of a rare-earth element component and an aluminum component. Rare-earth element components and aluminum components are added as sintering aids. The rare-earth aluminum oxide is, for example, $R_4Al_2O_9$ crystals, $R_3Al_5O_{12}$ crystals, and $RAlO_3$ crystals. "R" in each is a rare-earth element (yttrium or a lanthanoid element). $R_4Al_2O_9$ crystals are referred to as YAM crystals. $R_3Al_5O_{12}$ crystals are referred to as YAG crystals. $RAlO_3$ crystals are referred to as YAL crystals. YAL crystals also are referred to as YAP crystals. "YAM crystal", "YAG crystal", and "YAL crystal" also include cases where "R" is an element other than yttrium.

The melting point of a YAM crystal is higher than the melting point of a YAG crystal and the melting point of a YAL crystal. The melting point of a YAM crystal is 1,950 °C; the melting point of a YAG crystal is 1,908 °C; and the melting point of a YAL crystal is 1,907 °C. When the wear-resistant member includes YAM crystals, the durability for frictional heat of the sliding surface can be increased. YAG crystals and YAL crystals tend to cause the formation of white regions, which are described below, more easily than YAM crystals. That is, when rare-earth aluminum oxide crystals are present in the sintered body, it is favorable for the rare-earth aluminum oxide crystals to be present as YAM crystals. It is therefore favorable for the ratio $(I_{19.1°} + I_{31.0°} + I_{32.5°})/(I_{33.6°} + I_{36.1°})$ to be within the range of not less than 0 and not more than 0.100, and more favorably within the range of not less than 0.001 and not more than 0.090.

It is favorable for XRD peaks based on $R_3Al_5O_{12}$ crystals (YAG crystals) and XRD peaks based on $RAlO_3$ crystals (YAL crystals) not to be detected (or to be below the detection limit). Peaks based on YAG crystals and YAL crystals not being detected indicates that $R_3Al_5O_{12}$ crystals and $RAlO_3$ crystals are not present in the sintered body, or that these crystals are in trace amounts that cannot be detected by XRD. Therefore, "XRD peaks of YAG crystals and YAL crystals not being detected" includes YAG crystals and YAL crystals being below the detection limit.

By YAG crystals and YAL crystals not being detected, the ratio of rare-earth aluminum oxide crystals present as YAM crystals can be increased. As explained above, the durability for frictional heat of the sliding surface can be increased when the wear-resistant member includes YAM crystals. By increasing the ratio of YAM crystals, the effect of the durability for frictional heat can be further increased.

There are also cases where $R_3Al_5O_{12}$ and $RAlO_3$ are present as amorphous phases. In the silicon nitride sintered body according to the embodiment, at least one selected from $R_4Al_2O_9$, $R_3Al_5O_{12}$, and $RAlO_3$ may be present as an amorphous phase. $R_3Al_5O_{12}$ and $RAlO_3$ tend to cause the formation of white regions, which are described below, more easily than $R_4Al_2O_9$. In other words, the $R_4Al_2O_9$ amorphous phase does not easily become a white region. Therefore, when the silicon nitride sintered body includes an amorphous phase of a rare-earth aluminum oxide, it is favorable for the rare-earth aluminum oxide to be present as a $R_4Al_2O_9$ amorphous phase. It is favorable for less of the $R_3Al_5O_{12}$ amorphous phase and the $RAlO_3$ amorphous phase to be present.

For example, when yttrium is used, peaks based on YAG crystals are detected at $33.3°\pm0.3°$, $55.1°\pm0.3°$, $57.4°\pm0.3°$, etc. Peaks based on YAL crystals are detected at $28.1°\pm0.3°$, $32.9°\pm0.3°$, $49.6°\pm0.3°$, etc. The PDF card is referenced when determining the presence of XRD peaks based on a specific crystal compound. The PDF card also is called the JCPDS card or the ICDD card. If YAM crystals, YAG crystals, and YAL crystals cannot be discriminated based on the XRD peaks, the crystals may be analyzed using TEM, etc.

The maximum peak intensities detected at $36.5\pm0.3°$ and $42.4\pm0.3°$ are respectively taken as $I_{36.5°}$ and $I_{42.4°}$. The peaks that are detected in these ranges correspond to titanium nitride. It is sufficient for a peak to be present in at least one range among $36.5\pm0.3°$ and $42.4\pm0.3°$. Peaks that correspond to titanium nitride may be present in ranges other than the two ranges of $36.5\pm0.3°$ and $42.4\pm0.3°$. It is favorable for the XRD peaks based on titanium nitride and $\beta$-$Si_3N_4$ crystals to satisfy the following Formula 4.

$$\text{Formula 4: } 0.020 \leq (I_{36.5°} + I_{42.4°})/(I_{33.6°} + I_{36.1°}) \leq 0.050$$

In the silicon nitride sintered body according to the embodiment, it is favorable to use both a rare-earth element component and an aluminum component as sintering aids. In addition to these components, at least one component selected from the group consisting of titanium (Ti), hafnium (Hf), molybdenum (Mo), tungsten (W), magnesium (Mg), and zirconium (Zr) also can be used as sintering aids. The additional component selected from the group consisting of Ti, Hf, Mo, W, Mg, and Zr is, for example, at least one compound selected from the group consisting of oxide, nitride, carbide, and silicide. The additional component may be a conjugated compound. The conjugated compound is, for example, an oxynitride. Silicon carbide (SiC) may be added to the sintering aid. Ti, Hf, Mo, W, Mg, Zr, and SiC perform the role of reinforcing the grain boundary phase.

For example, JP 5362758 (Patent Literature 3) discusses a silicon nitride sintered body including titanium nitride grains having an aspect ratio of 1.0 to 1.2. In Patent Literature 3, titanium oxide that is added becomes titanium nitride grains in the sintering process. In other words, titanium changes from an oxide to a nitride in the sintering process. In the process of changing from an oxide to a nitride, small grains of titanium nitride can be dispersed in the sintered body. As a result, the grain boundary phase can be reinforced. Reinforcing the grain boundary phase leads to an improvement of the wear resistance, strength, fracture toughness, etc. It is therefore favorable for the sintered body to include titanium nitride grains. In XRD analysis, $I_{36.5°}$ or $I_{42.4°}$ being detected indicates that titanium nitride (TiN) is present as a crystal.

If the ratio $(I_{36.5°} + I_{42.4°})/(I_{33.6°} + I_{36.1°})$ is less than 0.020, there is a possibility that the amount of titanium nitride relative to the amount of $\beta$-$Si_3N_4$ crystals may be low, and the effects caused by titanium nitride may be insufficient. If the ratio $(I_{36.5°} + I_{42.4°})/(I_{33.6°} + I_{36.1°})$ is greater than 0.050, there is a possibility that the amount of titanium nitride relative to the amount of $\beta$-$Si_3N_4$ crystals may be too high. If the amount of titanium nitride is excessively high, there is a possibility that the ratio of melilite crystals in the grain boundary phase may be insufficient.

The grain boundary phase can be further reinforced by the ratio $(I_{36.5°} + I_{42.4°})/(I_{33.6°} + I_{36.1°})$ being within the range of not less than 0.020 and not more than 0.050 in addition to Formulas 1 and 2 being satisfied. That is, the grain boundary phase can be reinforced while controlling the amount present and orientation of the $\beta$-$Si_3N_4$ crystals, the hexagonal $\alpha$-SiAlON crystals, and the melilite crystals. By satisfying Formula 3 in addition to Formulas 1, 2, and 4, YAM crystals and titanium nitride can coexist in the grain boundary phase. As a result, the grain boundary phase can be further reinforced.

The range of 36.1°±0.3° in which a peak based on $\beta$-$Si_3N_4$ crystals may appear partially overlaps the range of 36.5°±0.3° in which a peak based on titanium nitride may appear. $\beta$-$Si_3N_4$ is the base material of the silicon nitride sintered body. The peak that is based on $\beta$-$Si_3N_4$ is much larger than the peak based on titanium nitride. Therefore, the peak based on $\beta$-$Si_3N_4$ crystals and the peak based on titanium nitride are discriminable. For example, when the silicon nitride sintered body includes titanium nitride but no peaks are confirmed in any of the ranges of 35.8° to 36.2° and 36.4° to 36.8°, multiple peaks may appear in the range of 36.2° to 36.4°. In such a case, a maximum peak appears in the range of 36.2° to 36.3°. The maximum peak is determined to be a peak based on $\beta$-$Si_3N_4$ crystals. The second largest peak appears in the range of 36.3° to 36.4°. The second largest peak is determined to be a peak based on titanium nitride crystals.

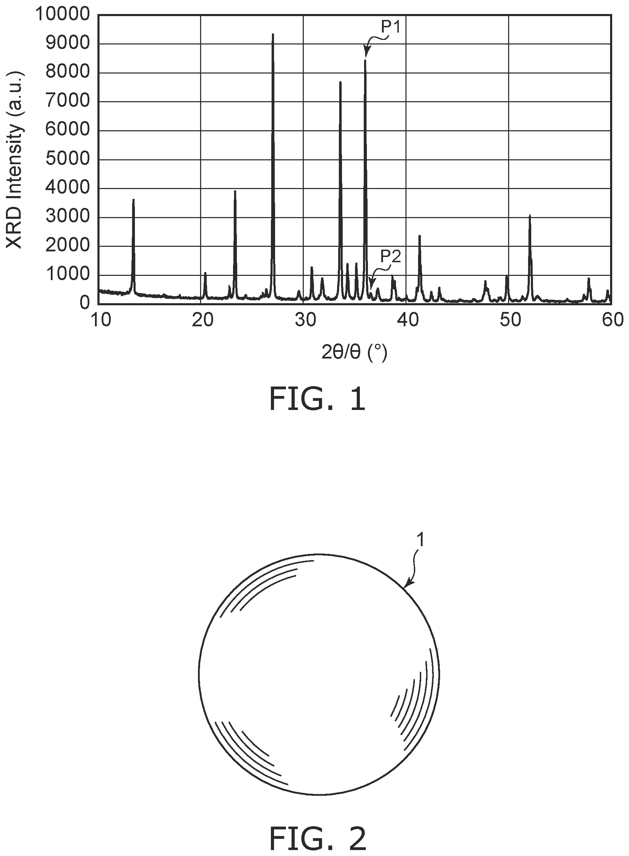

FIG. 1 shows an example of XRD analysis results of the silicon nitride sintered body according to the embodiment. As shown in FIG. 1, a peak P2 at 36.5°±0.3° based on titanium nitride is detected at the vicinity of the base of a peak P1 at 36.1°±0.3° based on $\beta$-$Si_3N_4$ crystals.

It is favorable for the silicon nitride sintered body to include not less than 3 mass% and not more than 7 mass% of Al and not less than 2 mass% and not more than 8 mass% of a rare-earth element. The Al content is the value converted into elemental Al. The content of the rare-earth element is a value converted into elemental rare-earth element. The Al in the silicon nitride sintered body may be present as a compound in which Al is bonded to another component. When multiple rare-earth elements are added, it is favorable for the total amount of rare-earth element to be within the range of not less than 2 mass% and not more than 8 mass%. Al is a constituent element of the hexagonal $\alpha$-SiAlON crystals or the YAM crystals. The rare-earth element is a constituent element of the melilite crystals or the YAM crystals.

It is favorable for the oxygen amount in the silicon nitride sintered body to be within the range of not less than 2.0 mass% and not more than 4.0 mass%. "The oxygen amount in the silicon nitride sintered body" refers to the total oxygen amount included in the silicon nitride sintered body. The formation of the crystals can be controlled by controlling the oxygen amount. It is therefore favorable for the oxygen amount in the silicon nitride sintered body to be within the range of not less than 2.0 mass% and not more than 4.0 mass%, and more favorably within the range of not less than 2.5 mass% and not more than 3.4 mass%.

It is favorable for the iron (Fe) content in the silicon nitride sintered body to be within the range of not less than 10 wtppm and not more than 3,000 wtppm. Iron may be included as an impurity in the silicon nitride powder or the sintering aid powder. Iron may be mixed as an impurity when iron alloys are used in the manufacturing equipment. The iron content in the silicon nitride sintered body is the content converted into elemental iron. The iron in the silicon nitride sintered body also is present as compounds.

It is favorable for the chrome (Cr) content in the silicon nitride sintered body to be within the range of not less than 10 wtppm and not more than 3,000 wtppm. Chrome may be included as an impurity in the silicon nitride powder or the sintering aid powder. Chrome also is mixed as an impurity when stainless steel is used in the manufacturing equipment. The chrome content in the silicon nitride sintered body is the content converted into elemental chrome. The chrome in the silicon nitride sintered body also is present as compounds.

It is favorable for the calcium (Ca) content in the silicon nitride sintered body to be within the range of not less than 10 wtppm and not more than 3,000 wtppm. Calcium may be included as an impurity in the silicon nitride powder or the sintering aid powder. The calcium content in the silicon nitride sintered body is the content converted into elemental calcium. The calcium in the silicon nitride sintered body also is present as compounds.

Fe, Cr, and Ca are mainly impurities in the silicon nitride powder. These impurities cause nonuniformity of the sinterability. If the sinterability is nonuniform, fluctuation of the grain growth, etc., may occur, which may cause degradation of the strength or wear resistance. As explained above, by controlling the XRD peaks of the hexagonal $\alpha$-SiAlON crystals, the $\beta$-$Si_3N_4$ crystals, and the melilite crystals, even when these impurities are included in the sintered body, the characteristics of the sintered body can be improved. In particular, a silicon nitride powder manufactured by direct nitriding includes a high amount of the impurities described above. According to the embodiment, even when a silicon nitride powder manufactured by direct nitriding is used, the characteristics of the sintered body can be improved.

It is favorable for the Fe content of the silicon nitride sintered body to be within the range of not less than 10 wtppm and not more than 3,000 wtppm, and more favorably within the range of not less than 50 wtppm and not more than 2,000 wtppm. It is favorable for the Cr content of the silicon nitride sintered body to be within the range of not less than 10 wtppm and not more than 3,000 wtppm, and more favorably within the range of not less than 50 wtppm and not more than 2,000 wtppm. It is favorable for the Ca content of the silicon nitride sintered body to be within the range of not less than 10 wtppm and not more than 3,000 wtppm, and more favorably within the range of not less than 50 wtppm and not more than 2,000 wtppm. As long as Formulas 1 and 2 are satisfied, a silicon nitride powder that has less impurities may be used to manufacture the silicon nitride sintered body according to the embodiment. For example, a silicon nitride powder manufactured by imide decomposition has a small amount of impurities.

When any cross section of the silicon nitride sintered body is observed with a laser microscope, it is favorable for the area ratio of white regions in a measurement area of 4,000 $\mu$m$\times$4,000 $\mu$m to be not more than 70%. The cross section that is observed by laser microscope may be the same as the measurement surface of the XRD analysis.

Measurement conditions of the laser microscope will now be described. The laser microscope is the 3D laser scanning microscope VK-X1000 manufactured by Keyence Corporation or an equivalent apparatus. The magnification of the laser microscope is set to 20 times; and a measurement area of 4,000 $\mu$m$\times$4,000 $\mu$m is observed in dark-field. The area ratio of white regions is calculated by performing image analysis of the dark-field image. In the image analysis, the image is binarized using the image analysis software Image-J.

The binarization method is as follows. A dark-field image (a color image) is taken by setting the "brightness" item of the laser microscope to 120; and the color image is converted to a grayscale image having a gradation of 0 to 255. The binarization threshold is set to 230. The binarization is performed so that regions having a pixel value of not less than 230 are set to white regions; and regions having a pixel value of less than 230 are set to black regions. The ratio of the area of the white regions in the binary image is calculated.

The white regions occur due to structural defects. Structural defects occur due to voids, sintering aid segregation, impurity segregation, density fluctuation, etc. $R_3Al_5O_{12}$ and $RAlO_3$ tend to cause the formation of white regions more easily than $R_4Al_2O_9$. $R_3Al_5O_{12}$ and $RAlO_3$ easily cause white regions in both crystalline and amorphous forms. Most favorably, the area ratio of white regions is 0% (or below the detection limit). On the other hand, as explained above, white regions form more easily when a silicon nitride powder having a high amount of impurities is used. By satisfying Formulas 1 and 2 above, the characteristics of the sintered body can be improved even when white regions are present. It is favorable for the area ratio of white regions to be within the range of not less than 0% and not more than 70%, and more favorably within the range of not less than 0% and not more than 30%.

The area ratio of white regions may be 3% or more. If the area ratio of white regions is to be reduced to 0%, this may place a high burden on production control. By controlling the XRD peak ratios of Formulas 1 and 2 above, the wear resistance of the sintered body can be improved even when the area ratio of white regions is within the range of not less than 3% and not more than 70% or within the range of not less than 3% and not more than 30%.

When any cross section of the silicon nitride sintered body is observed with SEM, it is favorable for multiple crystal grains in a measurement area of 20 $\mu$m$\times$15 $\mu$m to have a major diameter of not less than 2.5 $\mu$m and an aspect ratio of not less than 2.5. It is also favorable for the total area ratio of the crystal grains to be within the range of not less than 20% and not more than 70%. The cross section observed with SEM may be the same as the observation surface of the laser microscope or the measurement surface of the XRD analysis.

The SEM observation method will now be described. SEM is performed using the JCM-7000 manufactured by JOEL, the JSM-7200F manufactured by JOEL, or an equivalent or better apparatus. The magnification is set to 5,000 times. A measurement area of 20 $\mu$m$\times$15 $\mu$m is observed, and a SEM image is obtained. Crystal grains that have a major diameter of not less than 2.5 $\mu$m and an aspect ratio of not less than 2.5 are extracted from the SEM image. The crystal grains appear darker than the grain boundaries and appear to be, for example, gray. Therefore, the crystal grains are discriminable from the grain boundaries.

The "major diameter" is the distance between the two most distant points positioned on the boundary of the crystal grain. The "minor diameter" is the dimension of the crystal grain in a direction passing through the midpoint of the major diameter perpendicular to the direction of the major diameter. The aspect ratio is calculated as major diameter divided by minor diameter. The crystal grains that have a major diameter of not less than 2.5 $\mu$m and an aspect ratio of not less than 2.5 are extracted from a measurement area of 20 $\mu$m×15 $\mu$m; and the total area of the crystal grains is calculated. The total area ratio is calculated by dividing the total area by the area of the entire SEM image. Three non-overlapping 20 $\mu$m×15 $\mu$m areas are observed, and the total area ratio is calculated for each measurement area. The average of the three total area ratios is used as the final total area ratio. Even when the contour of a crystal grain is partially cut off in the measurement area, the crystal grain is included in the count if the crystal grain has a major diameter of not less than 2.5 $\mu$m and an aspect ratio of not less than 2.5. Herein, a crystal grain that has a major diameter of not less than 2.5 $\mu$m and an aspect ratio of not less than 2.5 is referred to as a "major-axis crystal grain".

The major-axis crystal grains are mainly $\beta$-Si$_3$N$_4$ crystal grains. The presence of multiple major-axis crystal grains in a measurement area of 20 $\mu$m×15 $\mu$m substantially indicates that multiple $\beta$-Si$_3$N$_4$ crystal grains are present. Additionally, it is favorable for the total area ratio of the major-axis crystal grains to be within the range of not less than 20% and not more than 70%. According to the embodiment, the orientation of the $\beta$-Si$_3$N$_4$ crystal grains in a narrow region of 20 $\mu$m×15 $\mu$m is controlled. The wear resistance of the sintered body can be further improved thereby.

The major-axis crystal grains become complexly entangled, and crystal grains having an aspect ratio of less than 2.5 become positioned between the major-axis crystal grains, thereby improving the characteristics of the sintered body. Crystal grains other than $\beta$-Si$_3$N$_4$ crystal grains in the cross-section observation may be counted as major-axis crystal grains. When Formulas 1 and 2 above are satisfied, many of the major-axis crystal grains are $\beta$-Si$_3$N$_4$ crystal grains.

According to the silicon nitride sintered body having the features described above, the Vickers hardness HV can be 1,500 or more. The fracture toughness value can be 6.0 MPa m$^{1/2}$ or more. The Vickers hardness (Hv) is measured by a method in accordance with JIS-R-1610 with a pressing load 20 kgf. The fracture toughness value is measured in accordance with the indentation fracture method (the IF method) of JIS-R-1607 with a pressing load 20 kgf, and is calculated using Niihara's equation. JIS-R-1610 corresponds to ISO 14705. JIS-R-1607 corresponds to ISO 15732.

According to the embodiment, the fluctuation of the Vickers hardness can be suppressed. The fluctuation of the fracture toughness value can be suppressed. When the Vickers hardness HV of any one hundred silicon nitride sintered bodies is measured, the difference between the maximum value of the Vickers hardness HV and the minimum value of the Vickers hardness HV can be 80 or less. When the fracture toughness value of any one hundred silicon nitride sintered bodies is measured, the difference between the maximum value of the fracture toughness value and the minimum value of the fracture toughness value can be 0.8 MPa m$^{1/2}$ or less.

The silicon nitride sintered body according to the embodiment can be used in a wear-resistant member. The wear-resistant member is, for example, a bearing ball, a roller, a check ball, a wear pad, a plunger, a roller, a friction stir welding tool member, etc. Such a wear-resistant member slides against a mating member made of a metal member, a ceramic, etc. To increase the durability of the sliding surface, it is favorable for the surface roughness (Ra) of the wear-resistant member to be not more than 0.5 $\mu$m, more favorably not more than 0.1 $\mu$m, and most favorably not more than 0.05 $\mu$m. The surface roughness (Ra) of the sliding surface can be reduced by using a polished surface as the sliding surface.

According to the embodiment, the fluctuation of the hardness of the silicon nitride sintered body is suppressed. Therefore, the fluctuation of the polishing efficiency also is suppressed, and so similar polished surfaces can be obtained using the same polishing time.

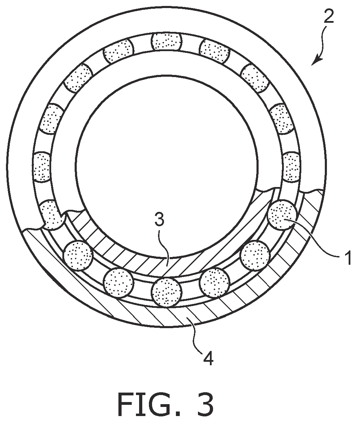

A bearing ball will now be described as an example of a wear-resistant member. FIG. 2 shows an example of a bearing ball. FIG. 3 shows an example of a bearing. FIGS. 2 and 3 show a bearing ball 1. FIG. 3 shows a bearing 2, an inner ring 3, and an outer ring 4.

The bearing ball 1 is a member made of the silicon nitride sintered body according to the embodiment. Multiple bearing balls 1 are located between the inner ring 3 and the outer ring 4 in the bearing 2. In the example shown in FIG. 3, sixteen bearing balls 1 are used in the bearing 2.

Non-Patent Literature 1 discusses a motor of an electric vehicle (EV) or a hybrid electric vehicle (HEV). The maximum rotational speed of the passenger car motor is said to reach 10,000 to 15,000 rpm. An electric vehicle repeatedly runs and stops, and so the rotational speed of the motor changes within the range of 0 to 15,000 rpm. An inverter motor has been developed to correspond to the change of the rotational speed of the motor. In the inverter motor, the rotational speed of the motor is controlled by controlling the frequency of the power supplied to an AC (alternating current) motor. As described in Non-Patent Literature 1, changes in the rotational speed lead to changes in torque. In mechanics, torque is the moment of a force around a fixed rotation axis that acts with the rotation axis at the center. In other words, an environment in which the rotational speed changes is an environment in which the torque (i.e., the stress) applied to the bearing ball changes.

According to the embodiment, the silicon nitride sintered body suppresses the fluctuation of the fracture toughness value. The fracture toughness value is a metric that indicates the resistance to damage. Specifically, the fracture toughness value indicates the resistance to damage when a dynamic load is applied to a member having a crack or a crack-shaped defect. The fracture toughness value is one type of specific metric representing the toughness. The toughness means the resistance to damage of the material.

For the bearing 2, the torque changes as the rotational speed changes. The stress that is applied to the bearing ball 1 changes as the torque changes. In other words, when the rotational speed changes, the stress that is applied to the bearing ball 1 changes as the bearing ball 1 slides. Eccentricity occurs particularly when the rotational speed is high. Eccentricity slightly changes the gap between the bearing ball and the inner and outer rings. The change of the gap leads to a change of the contact state between the bearing ball 1 and the inner ring 3 and between the bearing ball 1 and the outer ring 4; and the bearing ball 1 applies a large load on the inner ring 3 and the outer ring 4. As a result, degradation of the wear resistance and electrolytic corrosion may occur.

According to the embodiment, the fluctuation of the fracture toughness value of the silicon nitride sintered body is suppressed. By suppressing the fluctuation of the fracture toughness value, the load of the bearing ball 1 on the inner ring 3 and the outer ring 4 is stable even in an environment in which eccentricity may occur. Therefore, the durability of the bearing 2 can be improved. According to the embodiment, not only the durability of the bearing ball 1 but also the durability of the bearing 2 can be improved. In other words, the wear-resistant member according to the embodiment is favorable as a bearing ball used in an inverter motor bearing.

A method for manufacturing a silicon nitride sintered body according to an embodiment will now be described. The manufacturing method is not limited as long as the silicon nitride sintered body according to the embodiment has the features described above. A method for obtaining a silicon nitride sintered body with a high yield will now be described.

First, a silicon nitride powder is prepared. It is favorable for the silicon nitride powder to include not less than 85 mass% of $\alpha$-phase silicon nitride ($\alpha$-$Si_3N_4$), and for the average grain size to be not more than 2 $\mu$m. It is favorable for the oxygen content of the silicon nitride powder to be not more than 2 mass%.

A silicon nitride powder that has an impurity Fe content within the range of not less than 10 wtppm and not more than 3,000 wtppm may be used. A silicon nitride powder that has an impurity Cr content within the range of not less than 10 wtppm and not more than 3,000 wtppm may be used. A silicon nitride powder that has an impurity Ca content within the range of not less than 10 wtppm and not more than 3,000 wtppm may be used. For example, impurities within the ranges described above may be included in a silicon nitride powder manufactured by direct nitriding. Or, a silicon nitride powder that includes fewer impurities than the ranges described above may be used in the method for manufacturing the silicon nitride sintered body according to the embodiment. For example, a silicon nitride powder manufactured by imide decomposition includes fewer impurities than the ranges described above. The silicon nitride sintered body according to the embodiment can be manufactured even when a silicon nitride powder including more impurities than the ranges described above is used.

Then, a sintering aid powder is prepared. The sintering aid powder is, for example, a rare-earth element compound and an aluminum compound. The rare-earth element compound is, for example, at least one selected from the group consisting of an oxide of yttrium, an oxynitride of yttrium, an oxide of a lanthanoid element, and an oxynitride of a lanthanoid element. By using a rare-earth element oxide or a rare-earth element oxynitride, it becomes easier to form hexagonal $\alpha$-SiAlON crystals and $R_2Si_3O_3N_4$ crystals. When the total of the silicon nitride powder and all of the sintering aid powders is taken to be 100 mass%, it is favorable for the added amount of the rare-earth element compound in terms of the elemental rare-earth element to be within the range of not less than 2 mass% and not more than 8 mass%.

The aluminum compound is, for example, at least one selected from the group consisting of aluminum oxide, aluminum nitride, and aluminum oxynitride. When both aluminum nitride and aluminum oxide are used, it is favorable for the ratio of the added amount (the mass) of aluminum nitride relative to the total amount of the added amounts of aluminum nitride and aluminum oxide to be within the range of not less than 0.6 and not more than 0.95. In other words, it is favorable for 0.6 $\leq$ aluminum nitride added amount (mass%)/(aluminum nitride added amount (mass%) + aluminum oxide added amount (mass%)) $\leq$ 0.95. Aluminum nitride is represented by AlN; and aluminum oxide is represented by $Al_2O_3$. By controlling the mass ratio of the added AlN and $Al_2O_3$ (AlN/(AlN + $Al_2O_3$)), it becomes easier to form hexagonal $\alpha$-SiAlON crystals and $R_4Al_2O_9$ crystals. The formation of $R_3Al_5O_{12}$ crystals and $RAlO_3$ crystals also can be suppressed. It is therefore favorable for the mass ratio (AlN/(AlN + $Al_2O_3$)) to be within the range of not less than 0.6 and not more than 0.95, and more favorably within the range of not less than 0.75 and not more than 0.85. When the total of the silicon nitride powder and all of the sintering aid powders is taken to be 100 mass%, it is favorable for the added amount of the aluminum compound in terms of elemental aluminum to be within the range of not less than 3 mass% and not more than 7 mass%.

In addition to the rare-earth element compound and the aluminum compound, at least one component selected from the group consisting of titanium (Ti), hafnium (Hf), molybdenum (Mo), tungsten (W), magnesium (Mg), and zirconium (Zr) may be added as a sintering aid as necessary. The component selected from the group consisting of titanium (Ti), hafnium (Hf), molybdenum (Mo), tungsten (W), magnesium (Mg), and zirconium (Zr) is, for example, at least one compound selected from the group consisting of an oxide, a nitride, a carbide, and a silicide. When the total of the silicon nitride powder and all of the sintering aid powders is taken to be 100 mass%, it is favorable for the total of the added amounts of the sintering aids other than the rare-earth element compound and the aluminum compound to be within the range of not less than 0.1 mass% and not more than 10 mass%, and more favorably within the range of not less than 0.2 mass% and not more than 5 mass%. Silicon carbide (SiC) or silicon oxide ($SiO_2$) may be added to the sintering aid as necessary. It is favorable for the added amount of silicon carbide or silicon oxide to be within the range of not less than 0.1 mass% and not more than 10 mass%. The added amount of silicon carbide or silicon oxide is the value when the total of the silicon nitride powder and all of the sintering aid powders (including silicon carbide or silicon oxide) is taken to be 100 mass%.

When the total of the silicon nitride powder and all of the sintering aid powders is taken to be 100 mass%, it is favorable for the oxygen amount to be within the range of not less than 2.0 mass% and not more than 4.0 mass%. The "oxygen amount" represents the oxygen content in the raw material powder and is, for example, the total value of the oxygen amount of the silicon nitride powder, the oxygen amount of the rare-earth oxide powder, the oxygen amount of the aluminum oxide powder, etc. Control of the oxygen amount in the raw material powder leads to control of the oxygen amount in the silicon nitride sintered body. As a result, the formation of the crystals can be controlled. It is therefore favorable for the oxygen amount in the raw material powder to be within the range of not less than 2.0 mass% and not more than 4.0 mass%, and more favorably within the range of not less than 2.5 mass% and not more than 3.4 mass%.

It becomes easier to better control the formation of the crystals by combining the control of the oxygen amount and the control of the mass ratio $AlN/(AlN + Al_2O_3)$. Thus, when manufacturing the silicon nitride sintered body according to the embodiment, it is favorable to form the crystals by mixing at least the three types of powders of the silicon nitride powder, the rare-earth element compound powder, and the aluminum compound powder and by reacting the components. The crystals can be more uniformly distributed than when a hexagonal $\alpha$-SiAlON powder or a $R_2Si_3O_3N_4$ powder is used as the raw material powder.

Then, a pulverizing process is performed in which the silicon nitride powder and the sintering aid powder are mixed. A ball mill or other pulverizer is used in the pulverizing process. A binder and a solvent are added to the pulverized mixed powder as necessary.

Then, a forming process is performed. The forming process is, for example, die molding, cold isostatic pressing (CIP), injection molding, tumbling granulation, sheet forming, etc. Die molding or tumbling granulation is used when making a spherical silicon nitride sintered body. When making a silicon nitride sintered body used in a bearing ball, the compact that is obtained by die molding may be subjected to cold isostatic pressing (CIP). A compact is obtained by performing the forming process.

A dewaxing process is performed on the compact thus obtained. The binder and the like are removed in the dewaxing process. It is favorable for the dewaxing process to be performed at a temperature within the range of 300 to 600 °C. The atmosphere of the dewaxing process is not particularly limited, and may be ambient air or a nonoxidizing atmosphere. The nonoxidizing atmosphere is, for example, a nitrogen atmosphere or an argon atmosphere. A dewaxed body is obtained by the dewaxing process.

A sintering process of sintering the dewaxed body is performed. It is favorable for the sintering temperature to be within the range of not less than 1,700 °C and not more than 1,900 °C. If the sintering temperature is less than 1,700 °C, there is a possibility that the reaction of the components may be insufficient, and the formation of the crystals may be insufficient. If the sintering temperature is greater than 1,900 °C, there is a possibility that the grain growth of the $\beta$-$Si_3N_4$ crystal grains may be excessive. It is therefore favorable for the sintering temperature to be within the range of not less than 1,700 °C and not more than 1,900 °C, and more favorably within the range of not less than 1,775 °C and not more than 1,825 °C.

Either pressureless sintering or pressure sintering may be performed in the sintering process. It is favorable to perform the sintering process in a nonoxidizing atmosphere. The nonoxidizing atmosphere is, for example, a nitrogen atmosphere or an argon atmosphere.

It is favorable to perform hot isostatic pressing (HIP) at not less than 30 MPa in a nonoxidizing atmosphere after the sintering process as necessary. The nonoxidizing atmosphere is, for example, a nitrogen atmosphere or an argon atmosphere. It is favorable for the temperature of the HIP processing to be within the range of not less than 1,500 °C and not more than 1,900 °C. By performing HIP processing, pores inside the silicon nitride sintered body can be reduced (e.g., eliminated). If the pressure of the HIP processing is less than 30 MPa, such effects cannot be sufficiently obtained. It is therefore favorable for the pressure to be not less than 30 MPa. The upper limit of the pressure of the HIP processing is not particularly limited, and is favorably not more than 200 MPa. If the pressure is greater than 200 MPa, there is a possibility that the load on the apparatus may increase.

By performing HIP processing, the value of the ratio $(I_{19.1°} + I_{31.0°} + I_{32.5°})/(I_{33.6°} + I_{36.1°})$ can be reduced. That is, XRD peaks based on YAM crystals can be reduced. Similarly, XRD peaks based on YAG crystals and XRD peaks based on YAL crystals also can be reduced. Therefore, another effect of HIP processing is that XRD peaks based on YAG crystals and XRD peaks based on YAL crystals are not detected. It is considered that this is because HIP processing causes some or all of YAM, YAG, and YAL to be incorporated into the hexagonal $\alpha$-SiAlON crystals.

For example, when a titanium oxide powder is added, the titanium oxide powder reacts with the silicon nitride powder in the sintering process to form titanium nitride grains. By performing HIP processing on the silicon nitride sintered body including titanium nitride, it becomes easier to control the ratio $(I_{36.5°} + I_{42.4°})/(I_{33.6°} + I_{36.1°})$ to be within the range of not less than 0.020 and not more than 0.050. It is considered that the HIP processing improves the crystallinity of the titanium nitride grains.

The wear-resistant member is obtained by polishing the silicon nitride sintered body thus manufactured at the necessary location. It is favorable to perform the polishing with a diamond abrasive. A polished surface having a surface roughness (Ra) of not more than 0.5 $\mu$m can be obtained by polishing. By regulating the size of the abrasive grain, a polished surface having a surface roughness (Ra) of not more than 0.1 $\mu$m, or even not more than 0.05 $\mu$m can be obtained.

Examples

Examples 1 to 23 and Comparative Examples 1 to 3

A silicon nitride powder was prepared in which the oxygen content was not more than 2 mass%; and not less than 85 mass% of $\alpha$-phase silicon nitride ($\alpha$-Si$_3$N$_4$) was included. The average particle size of the silicon nitride powder was not more than 2 $\mu$m. In each Example and Comparative Example, a silicon nitride powder manufactured by direct nitriding was used. In Examples 1 to 13, Examples 17 to 23, and Comparative Examples 1 to 3, the Fe amount, the Cr amount, and the Ca amount of the silicon nitride powder each were within the range of not less than 50 wtppm and not more than 1,000 wtppm. In Examples 14 to 16, the Fe amount, the Cr amount, and the Ca amount of the silicon nitride powder each were greater than 1,000 wtppm. Then, the sintering aids shown in Table 1 were prepared. In each Example, when the total of the silicon nitride powder and all of the sintering aid powders was taken to be 100 mass%, the added amount of the rare-earth element compound in terms of the elemental rare-earth element was within the range of not less than 2 mass% and not more than 8 mass%; and the Al content in terms of elemental Al was not less than 3 mass% and not more than 7 mass%.

[Table 1]

| | Raw material powder mixing ratio (mass%) | | | | | | AlN/ (AlN+Al$_2$O$_3$) | Oxygen amount (mass%) |
|---|---|---|---|---|---|---|---|---|
| | Si$_3$N$_4$ | Y$_2$O$_3$ | Al$_2$O$_3$ | AlN | TiO$_2$ | SiO$_2$ | | |
| Example1 | 88.6 | 4.4 | 1.2 | 4.5 | 1.3 | — | 0.78 | 2.8 |
| Example2 | 88.6 | 4.4 | 1.2 | 4.5 | 1.3 | — | 0.78 | 2.9 |
| Example3 | 88.6 | 4.4 | 1.2 | 4.5 | 1.3 | — | 0.78 | 2.8 |
| Example4 | 88.7 | 4.4 | 0.5 | 5.1 | 1.3 | — | 0.9 | 2.4 |
| Example5 | 88.7 | 4.4 | 0.5 | 5.1 | 1.3 | — | 0.9 | 2.4 |
| Example6 | 88.7 | 4.4 | 0.5 | 5.1 | 1.3 | — | 0.9 | 2.4 |
| Example7 | 88.7 | 4.4 | 0.5 | 5.1 | 1.3 | — | 0.9 | 2.6 |
| Example8 | 88.7 | 4.4 | 0.5 | 5.1 | 1.3 | — | 0.9 | 2.6 |
| Example9 | 88.7 | 4.4 | 0.5 | 5.1 | 1.3 | — | 0.9 | 2.6 |
| Example10 | 88.2 | 4.4 | 1.2 | 4.5 | 1.3 | 0.4 | 0.78 | 3.1 |
| Example11 | 88.7 | 4.4 | 0.5 | 5.1 | 1.3 | — | 0.9 | 2.4 |
| Example12 | 88.7 | 4.4 | 0.5 | 5.1 | 1.3 | — | 0.9 | 2.4 |
| Example13 | 88.7 | 4.4 | 0.5 | 5.1 | 1.3 | — | 0.9 | 2.4 |
| Example14 | 88.7 | 4.4 | 0.5 | 5.1 | 1.3 | — | 0.9 | 2.6 |
| Example15 | 88.7 | 4.4 | 0.5 | 5.1 | 1.3 | — | 0.9 | 2.6 |
| Example16 | 88.6 | 4.4 | 1.2 | 4.5 | 1.3 | — | 0.78 | 3.1 |
| Example17 | 90.3 | 2.7 | 0.5 | 5.1 | 1.4 | — | 0.9 | 2.4 |
| Example18 | 86.4 | 6.9 | 0.5 | 4.9 | 1.3 | — | 0.9 | 2.9 |
| Example19 | 87.0 | 6.1 (Er$_2$O$_3$) | 1.2 | 4.4 | 1.3 | — | 0.78 | 2.7 |
| Example20 | 89.0 | 4.5 | 0.5 | 5.1 | 0.9 | — | 0.9 | 2.6 |
| Example21 | 87.5 | 4.4 | 0.5 | 5.0 | 2.6 | — | 0.9 | 2.9 |
| Example22 | 88.6 | 2.7 | 3.5 | 4.9 | 0.3 | — | 0.71 | 3.1 |
| Example23 | 87.2 | 2.6 | 0.9 | 4.9 | 4.4 | — | 0.65 | 3.4 |
| Comparative Example1 | 87.8 | 4.4 | 5.3 | 1.2 | 1.3 | — | 0.19 | 5 |
| Comparative Example2 | 87.7 | 4.4 | 3.5 | 3.1 | 1.3 | — | 0.47 | 4.5 |
| Comparative Example3 | 88.1 | 4.4 | 4.4 | 1.8 | 1.3 | — | 0.29 | 4.9 |

The raw material powder was pulverized with a ball mill, and then a binder was added. Subsequently, die molding and CIP processing were performed to make a spherical compact including a band-shaped portion. The band-shaped portion was present at the outer circumference of the spherical compact and protruded outward. A dewaxed body was obtained by performing a dewaxing process on the spherical compact having the band-shaped portion. A sintering process and a HIP process were performed on the dewaxed body. In the sintering process, pressure sintering was performed in a nitrogen atmosphere. The temperatures and pressures of the sintering process and the temperatures and pressures of the HIP process were as shown in Table 2.

## [Table 2]

| | Sintering process | | HIP process | |
|---|---|---|---|---|
| | Temperature (°C) | Pressure (MPa) | Temperature (°C) | Pressure (MPa) |
| Example1 | 1800 | 0.5 | 1700 | 110 |
| Example2 | 1825 | 0.7 | 1750 | 100 |
| Example3 | 1825 | 1 | 1775 | 80 |
| Example4 | 1775 | 0.8 | 1800 | 90 |
| Example5 | 1800 | 0.7 | 1720 | 100 |
| Example6 | 1825 | 0.9 | 1775 | 120 |
| Example7 | 1775 | 0.7 | 1775 | 110 |
| Example8 | 1750 | 1 | 1740 | 100 |
| Example9 | 1725 | 0.7 | 1720 | 100 |
| Example10 | 1775 | 0.7 | 1775 | 80 |
| Example11 | 1800 | 0.6 | 1700 | 105 |
| Example12 | 1800 | 0.5 | 1715 | 105 |
| Example13 | 1800 | 0.8 | 1710 | 105 |
| Example14 | 1765 | 0.7 | 1740 | 100 |
| Example15 | 1775 | 0.7 | 1720 | 100 |
| Example16 | 1785 | 0.7 | 1720 | 80 |
| Example17 | 1770 | 1 | 1760 | 100 |
| Example18 | 1765 | 0.8 | 1750 | 100 |
| Example19 | 1780 | 0.7 | 1720 | 90 |
| Example20 | 1785 | 0.7 | 1775 | 100 |
| Example21 | 1785 | 0.7 | 1775 | 100 |
| Example22 | 1825 | 0.7 | 1750 | 100 |
| Example23 | 1810 | 0.7 | 1750 | 100 |
| Comparative Example1 | 1775 | 0.7 | 1800 | 80 |
| Comparative Example2 | 1775 | 0.7 | 1775 | 100 |
| Comparative Example3 | 1750 | 0.7 | 1725 | 100 |

The silicon nitride sintered bodies according to the Examples and the Comparative Examples were manufactured by the processes described above. XRD analysis was performed on arbitrary cross sections of the silicon nitride sintered bodies. The peaks based on each crystal were identified in the XRD analysis results; and each maximum peak intensity was recorded. The maximum peak intensity ratios specified in Formulas 1 to 4 were calculated using the maximum peak intensities. The presence of peaks based on YAG crystals and peaks based on YAL crystals also were checked. The conditions of the XRD analysis were as described above. The results are shown in Table 3.

[Table 3]

| | XRD analysis | | | | |
|---|---|---|---|---|---|
| | Formula 1 | Formula 2 | Formula 3 | Formula 4 | YAG or YAL crystal peak |
| Example1 | 0.111 | 0.076 | 0.048 | 0.036 | No |
| Example2 | 0.117 | 0.048 | 0.047 | 0.032 | No |
| Example3 | 0.117 | 0.063 | 0.056 | 0.032 | No |
| Example4 | 0.204 | 0.064 | 0.08 | 0.036 | No |
| Example5 | 0.211 | 0.057 | 0.088 | 0.034 | No |
| Example6 | 0.194 | 0.047 | 0.081 | 0.036 | No |
| Example7 | 0.175 | 0.052 | 0.071 | 0.034 | No |
| Example8 | 0.165 | 0.082 | 0.066 | 0.036 | No |
| Example9 | 0.164 | 0.07 | 0.069 | 0.036 | No |
| Example10 | 0.06 | 0.056 | 0.021 | 0.031 | No |
| Example11 | 0.154 | 0.057 | 0.042 | 0.033 | No |
| Example12 | 0.141 | 0.056 | 0.056 | 0.033 | No |
| Example13 | 0.138 | 0.052 | 0.074 | 0.034 | No |
| Example14 | 0.154 | 0.057 | 0.042 | 0.033 | No |
| Example15 | 0.141 | 0.046 | 0.043 | 0.033 | No |
| Example16 | 0.138 | 0.066 | 0.041 | 0.034 | No |
| Example17 | 0.152 | 0.049 | 0.082 | 0.036 | No |
| Example18 | 0.202 | 0.077 | 0.081 | 0.036 | No |
| Example19 | 0.198 | 0.067 | 0.070 | 0.031 | No |
| Example20 | 0.163 | 0.081 | 0.061 | 0.022 | No |
| Example21 | 0.167 | 0.071 | 0.068 | 0.072 | No |
| Example22 | 0.144 | 0.067 | 0.052 | 0.011 | No |
| Example23 | 0.131 | 0.036 | 0.051 | 0.124 | No |
| Comparative Example1 | 0 | 0.017 | 0.014 | 0.03 | Yes |
| Comparative Example2 | 0.059 | 0.118 | 0.015 | 0.032 | Yes |
| Comparative Example3 | 0.067 | 0 | 0 | 0.033 | Yes |

In Table 3, "Formula 1" represents the maximum peak intensity ratio $(I_{20.5°} + I_{22.8°} + I_{34.3°} + I_{38.7°})/(I_{33.6°} + I_{36.1°})$. "Formula 2" represents the maximum peak intensity ratio $(I_{31.8°} + I_{37.2°})/(I_{33.6°} + I_{36.1°})$. Formula 3 represents the maximum peak intensity ratio $(I_{19.1°} + I_{31.0°} + I_{32.5°})/(I_{33.6°} + I_{36.1°})$. Formula 4 represents the maximum peak intensity ratio $(I_{36.5°} +$

$I_{42.4°})/(I_{33.6°} + I_{36.1°})$.

The silicon nitride sintered bodies according to each of the Examples satisfied Formulas 1 to 4. No XRD peaks of YAG crystals or XRD peaks of YAL crystals were detected in any of the Examples. No XRD peaks based on cubic $\alpha$-SiAlON crystals were detected in any of the Examples. In contrast, each of the silicon nitride sintered bodies according to the Comparative Examples did not satisfy one of Formula 1 or Formula 2.

Then, the Fe amount, the Cr amount, and the Ca amount in the silicon nitride sintered body were measured. An arbitrary cross section of the silicon nitride sintered body was observed with a laser microscope. The total area ratio of white regions was measured in the laser microscope observation results. An arbitrary cross section of the silicon nitride sintered body was observed with SEM. The total area ratio of major-axis crystal grains having a major diameter of not less than 2.5 $\mu$m and an aspect ratio of not less than 2.5 was calculated based on the SEM observation results. The measurement methods were as described above. The results are shown in Table 4.

[Table 4]

| | Impurity (wtppm) | | | Total area ratio of white regions (%) | Total area ratio of major-axis crystal grains(%) |
|---|---|---|---|---|---|
| | Fe amount | Cr amount | Ca amount | | |
| Example1 | 38 | 13 | 389 | 0 | 45 |
| Example2 | 102 | 18 | 1011 | 0 | 38 |
| Example3 | 121 | 29 | 823 | 0 | 27 |
| Example4 | 228 | 41 | 448 | 4 | 33 |
| Example5 | 379 | 16 | 107 | 25 | 49 |
| Example6 | 88 | 28 | 566 | 14 | 39 |
| Example7 | 417 | 51 | 702 | 12 | 61 |
| Example8 | 185 | 32 | 481 | 18 | 29 |
| Example9 | 301 | 82 | 612 | 37 | 37 |
| Example10 | 734 | 104 | 932 | 63 | 26 |
| Example11 | 2497 | 32 | 481 | 12 | 28 |
| Example12 | 301 | 2163 | 612 | 15 | 34 |
| Example13 | 734 | 104 | 2768 | 19 | 21 |
| Example14 | 3591 | 32 | 481 | 83 | 79 |
| Example15 | 301 | 8014 | 612 | 88 | 80 |
| Example16 | 734 | 104 | 9425 | 80 | 82 |
| Example17 | 160 | 12 | 529 | 21 | 50 |
| Example18 | 271 | 49 | 318 | 29 | 44 |
| Example19 | 358 | 37 | 498 | 27 | 46 |
| Example20 | 182 | 35 | 475 | 12 | 50 |
| Example21 | 174 | 50 | 587 | 13 | 48 |
| Example22 | 278 | 33 | 689 | 34 | 66 |
| Example23 | 590 | 67 | 312 | 28 | 68 |
| Comparative Example1 | 310 | 36 | 884 | 82 | 77 |
| Comparative Example2 | 389 | 30 | 731 | 87 | 78 |
| Comparative Example3 | 402 | 38 | 931 | 78 | 72 |

The silicon nitride sintered bodies according to the Examples included Fe, Cr, and Ca as impurities. In Examples 1 to 13 and 17 to 23, the total area ratio of the white regions was within the range of not less than 0% and not more than 70%. Multiple major-axis crystal grains were present, and the total area ratio was within the range of not less than 20% and not more than 70%. A YAG amorphous phase and a YAL amorphous phase were not detected in Examples 1 to 3 which had 0% white regions.

The silicon nitride sintered bodies according to the Comparative Examples had contents of Fe, Cr, and Ca equal to those of the silicon nitride sintered bodies according to the Examples. On the other hand, in the Comparative Examples, the total area ratio of the white regions and the total area ratio of the major-axis crystal grains each were outside the respective favorable ranges.

Then, the Vickers hardness HV and the fracture toughness value of the silicon nitride sintered body were measured. The measurement methods of the Vickers hardness HV and the fracture toughness value were as described above. One hundred silicon nitride sintered bodies were prepared for the Examples and the Comparative Examples. The average value, the minimum value, and the maximum value were determined. The results are shown in Table 5.

[Table 5]

| | Vickers hardness HV | | | Fracture toughness value (MPa·m$^{1/2}$) | | |
|---|---|---|---|---|---|---|
| | Average value | Minimum value | Maximum value | Average value | Minimum value | Maximum value |
| Example1 | 1702 | 1689 | 1722 | 6.1 | 6 | 6.3 |
| Example2 | 1624 | 1600 | 1654 | 6.9 | 6.7 | 7.2 |
| Example3 | 1621 | 1589 | 1642 | 6.1 | 6 | 6.2 |
| Example4 | 1727 | 1702 | 1748 | 7.2 | 7 | 7.5 |
| Example5 | 1748 | 1731 | 1766 | 7.6 | 7.3 | 7.8 |
| Example6 | 1696 | 1669 | 1710 | 7.5 | 7.2 | 7.7 |
| Example7 | 1666 | 1647 | 1716 | 7.6 | 7.4 | 7.8 |
| Example8 | 1725 | 1711 | 1738 | 7.2 | 7 | 7.5 |
| Example9 | 1750 | 1727 | 1781 | 7.2 | 6.9 | 7.4 |
| Example10 | 1652 | 1627 | 1682 | 6.2 | 6 | 6.4 |
| Example11 | 1623 | 1611 | 1652 | 6.5 | 6.4 | 6.8 |
| Example12 | 1684 | 1613 | 1701 | 6.4 | 6.3 | 6.7 |
| Example13 | 1667 | 1621 | 1694 | 6.5 | 6.4 | 6.8 |
| Example14 | 1511 | 1485 | 1621 | 5.7 | 4.9 | 6.1 |
| Example15 | 1503 | 1472 | 1630 | 5.5 | 5.1 | 5.8 |
| Example16 | 1523 | 1465 | 1604 | 5.3 | 4.2 | 5.6 |
| Example17 | 1725 | 1711 | 1738 | 7.3 | 7.2 | 7.5 |
| Example18 | 1750 | 1727 | 1781 | 7.4 | 6.8 | 7.8 |
| Example19 | 1652 | 1627 | 1682 | 7.1 | 6.7 | 7.3 |
| Example20 | 1727 | 1709 | 1740 | 7.1 | 7.0 | 7.5 |
| Example21 | 1748 | 1727 | 1781 | 7.4 | 7.1 | 7.4 |
| Example22 | 1751 | 1734 | 1777 | 7.3 | 7.1 | 7.5 |
| Example23 | 1712 | 1692 | 1737 | 7.3 | 7.1 | 7.5 |
| Comparative Example1 | 1542 | 1428 | 1591 | 6.7 | 5.9 | 7 |
| Comparative Example2 | 1524 | 1411 | 1562 | 6.9 | 6 | 7.3 |
| Comparative Example3 | 1552 | 1437 | 1593 | 5.2 | 4 | 5.8 |

The average Vickers hardness HV of the silicon nitride sintered body was not less than 1,500 for the Examples. The fluctuation was within the range of $\pm 50$. The fracture toughness value was not less than 6.0 MPa m$^{1/2}$, and the fluctuation was within the range of $\pm 0.8$ MPa m$^{1/2}$.

In contrast, in the Comparative Examples, the average Vickers hardness HV was not less than 1,500, but the fluctuation was large. Similarly, the fluctuation of the fracture toughness value was large.

Then, a durability test was performed using the bearing balls made of the silicon nitride sintered bodies according to the Examples and the Comparative Examples. The diameter of the bearing ball used was 9.525 mm (3/8 inches). The bearing ball was polished so that the surface roughness Ra was not more than 0.013 $\mu$m. A bearing was made by assembling sixteen bearing balls between an inner ring and an outer ring. The inner ring and the outer ring were made of bearing steel SUJ2. The durability and electrolytic corrosion resistance of each bearing were checked.

In the durability test, the bearing was continuously driven while changing the rotational speed. The conditions of the change of the rotational speed were as follows. One set was defined as "50 rpm for 1 hour"→"increase from 50 rpm to 2,000 rpm over 1 hour"→"2,000 rpm for 1 hour"→"increase from 2,000 rpm to 13,000 rpm over 1 hour"→"13,000 rpm for 1 hour"→"reduce from 13,000 rpm to 50 rpm over 1 hour". The set was repeatedly performed. The sliding noise (dB) was measured when the continuous driving reached 100 hours, 400 hours, and 800 hours. The ratio of the sliding noise after 400 hours relative to the sliding noise after 100 hours and the ratio of the sliding noise after 800 hours relative to the sliding noise after 100 hours were calculated as increase rates of the sliding noise.

The silicon nitride sintered bodies for which the increase rate was not more than 10% were recorded as "excellent" (double circle). The silicon nitride sintered bodies for which the increase rate was greater than 10% and less than 20% were recorded as "good" (circle). The silicon nitride sintered bodies for which the increase rate was greater than 20% were recorded as "no-good" (cross). The test can determine changes in the sliding condition due to damage of the bearing ball or seizure of the bearing rings. The sliding noise measurement was performed in accordance with JIS-B-1548. For electrolytic corrosion resistance, the presence of electrolytic corrosion after running for 800 hours was checked. The results are shown in Table 6.

[Table 6]

| | Sliding noise change rate | | Electrolytic corrosion after 800 hours |
| --- | --- | --- | --- |
| | 400 hours | 800 hours | |
| Example1 | ◎ | ◎ | No |
| Example2 | ◎ | ◎ | No |
| Example3 | ◎ | ◎ | No |
| Example4 | ◎ | ◎ | No |
| Example5 | ◎ | ◎ | No |
| Example6 | ◎ | ◎ | No |
| Example7 | ◎ | ◎ | No |
| Example8 | ◎ | ◎ | No |
| Example9 | ◎ | ◎ | No |
| Example10 | ◎ | ○ | No |
| Example11 | ◎ | ◎ | No |
| Example12 | ◎ | ◎ | No |
| Example13 | ◎ | ◎ | No |
| Example14 | ○ | ○ | Yes |
| Example15 | ○ | ○ | Yes |
| Example16 | ○ | ○ | Yes |
| Example17 | ◎ | ◎ | No |
| Example18 | ◎ | ◎ | No |
| Example19 | ◎ | ◎ | No |
| Example20 | ◎ | ◎ | No |
| Example21 | ◎ | ◎ | No |
| Example22 | ◎ | ◎ | No |
| Example23 | ◎ | ◎ | No |
| Comparative Example1 | ○ | × | Yes |
| Comparative Example2 | ○ | × | Yes |
| Comparative Example3 | ○ | × | Yes |

The increase rate of the bearing ball sliding noise was suppressed for the Examples. The increase rate of the sliding noise after 800 hours was slightly larger for Examples 10 and 14 to 16 than for the other Examples. It is considered that this was caused by higher area ratios of white regions. Also, bearing ball electrolytic corrosion was suppressed for many Examples. This result showed that the embodiments improved the characteristics even for silicon nitride sintered bodies manufactured from silicon nitride powders having a high amount of impurities. For Examples 14 to 16, electrolytic corrosion was confirmed even though the wear resistance was good. This was due to a high impurity amount (the Fe amount, the Cr amount, or the Ca amount) compared to the other Examples. In contrast, for the Comparative Examples, the sliding noise increase rate after 800 hours was large. Electrolytic corrosion also was confirmed.

Embodiments of the invention include the following features.

Feature 1

A silicon nitride sintered body,

XRD analysis results of any cross section of the silicon nitride sintered body satisfying $0.001 \leq (I_{20.5°} + I_{22.8°} + I_{34.3°} + I_{38.7°})/(I_{33.6°} + I_{36.1°}) \leq 0.300$ and satisfying $0.002 \leq (I_{31.8°} + I_{37.2°})/(I_{33.6°} + I_{36.1°}) \leq 0.100$,

$I_{20.5°}$, $I_{22.8°}$, $I_{34.3°}$, and $I_{38.7°}$ being maximum peak intensities corresponding to hexagonal α-SiAlON crystals detected respectively at $20.5\pm0.3°$, $22.8\pm0.3°$, $34.3\pm0.3°$, and $38.7\pm0.3°$,

$I_{33.6°}$ and $I_{36.1°}$ being maximum peak intensities corresponding to β-$Si_3N_4$ crystals detected respectively at $33.6\pm0.3°$ and $36.1\pm0.3°$,

$I_{31.8°}$ and $I_{37.2°}$ being maximum peak intensities corresponding to $R_2Si_3O_3N_4$ crystals detected respectively at $31.8\pm0.3°$ and $37.2\pm0.3°$,

R being a rare-earth element.

Feature 2

The silicon nitride sintered body according to Feature 1, further comprising $R_4Al_2O_9$ crystals,

the XRD analysis results satisfying $0 \leq (I_{19.1°} + I_{31.0°} + I_{32.5°})/(I_{33.6°} + I_{36.1°}) \leq 0.100$,

R being a rare-earth element,

$I_{19.1°}$, $I_{31.0°}$, and $I_{32.5°}$ being maximum peak intensities corresponding to $R_4Al_2O_9$ crystals detected respectively at $19.1\pm0.3°$, $31.0\pm0.3°$, and $32.5\pm0.3°$.

Feature 3

The silicon nitride sintered body according to Feature 1 or Feature 2, further comprising titanium nitride,

the XRD analysis results satisfying $0.020 \leq (I_{36.5°} + I_{42.4°})/(I_{33.6°} + I_{36.1°}) \leq 0.050$,

$I_{36.5°}$ and $I_{42.4°}$ being maximum peak intensities corresponding to titanium nitride detected respectively at $36.5\pm0.3°$ and $42.4\pm0.3°$.

Feature 4

The silicon nitride sintered body according to any one of Features 1 to 3, wherein in the XRD analysis results, an XRD peak based on $R_3Al_5O_{12}$ crystals and an XRD peak based on $RAlO_3$ crystals are not detected, or are below a detection limit of the XRD analysis results.

Feature 5

The silicon nitride sintered body according to any one of Features 1 to 4, wherein the silicon nitride sintered body includes:

not less than 3 mass% and not more than 7 mass% of Al; and
not less than 2 mass% and not more than 8 mass% of a rare-earth element.

Feature 6

The silicon nitride sintered body according to any one of Features 1 to 5, wherein the silicon nitride sintered body has a content of iron within a range of not less than 10 wtppm and not more than 3,000 wtppm.

Feature 7

The silicon nitride sintered body according to any one of Features 1 to 6, wherein when the cross section is observed with a laser microscope, an area ratio of white regions in a measurement area of 4,000 μm×4,000 μm is not more than 70%.

Feature 8

The silicon nitride sintered body according to any one of Features 1 to 7, wherein

when the cross section is observed with SEM, a plurality of crystal grains having a major diameter of not less than 2.5 $\mu$m and an aspect ratio of not less than 2.5 are present in a measurement area of 20 $\mu$m$\times$15 $\mu$m, and
a total area ratio of the plurality of crystal grains is within a range of not less than 20% and not more than 70%.

Feature 9

The silicon nitride sintered body according to any one of Features 1 to 8, wherein
a Vickers hardness HV of the silicon nitride sintered body is not less than 1,500.

Feature 10

The silicon nitride sintered body according to any one of Features 1 to 9, wherein
a fracture toughness value of the silicon nitride sintered body is not less than 6.0 MPa m$^{1/2}$.

Feature 11

A wear-resistant member using the silicon nitride sintered body according to any one of Features 1 to 10.

Feature 12

The wear-resistant member according to Feature 11, wherein
the wear-resistant member is a bearing ball.
While certain embodiments of the invention have been illustrated, the embodiments are presented as examples, and are not intended to limit the scope of the inventions. These novel embodiments may be embodied in a variety of other forms; and various omissions, substitutions, modifications, etc., can be made without departing from the spirit of the inventions. These embodiments and their modifications are within the scope and spirit of the inventions, and are within the scope of the inventions described in the claims and their equivalents. The embodiments above can be implemented in combination with each other.

[Reference Numeral List]

1 bearing ball
2 bearing
3 inner ring
4 outer ring

**Claims**

1. A silicon nitride sintered body,

XRD analysis results of any cross section of the silicon nitride sintered body satisfying $0.001 \leq (I_{20.5°} + I_{22.8°} + I_{34.3°} + I_{38.7°})/(I_{33.6°} + I_{36.1°}) \leq 0.300$ and satisfying $0.002 \leq (I_{31.8°} + I_{37.2°})/(I_{33.6°} + I_{36.1°}) \leq 0.100$,
$I_{20.5°}$, $I_{22.8°}$, $I_{34.3°}$, and $I_{38.7°}$ being maximum peak intensities corresponding to hexagonal $\alpha$-SiAlON crystals detected respectively at 20.5$\pm$0.3°, 22.8$\pm$0.3°, 34.3$\pm$0.3°, and 38.7$\pm$0.3°,
$I_{33.6°}$ and $I_{36.1°}$ being maximum peak intensities corresponding to $\beta$-Si$_3$N$_4$ crystals detected respectively at 33.6$\pm$0.3° and 36.1$\pm$0.3°,
$I_{31.8°}$ and $I_{37.2°}$ being maximum peak intensities corresponding to R$_2$Si$_3$O$_3$N$_4$ crystals detected respectively at 31.8$\pm$0.3° and 37.2$\pm$0.3°,
R being a rare-earth element.

2. The silicon nitride sintered body according to claim 1, further comprising R$_4$Al$_2$O$_9$ crystals,

the XRD analysis results satisfying $0 \leq (I_{19.1°} + I_{31.0°} + I_{32.5°})/(I_{33.6°} + I_{36.1°}) \leq 0.100$,

R being a rare-earth element,

$I_{19.1°}$, $I_{31.0°}$, and $I_{32.5°}$ being maximum peak intensities corresponding to $R_4Al_2O_9$ crystals detected respectively at $19.1 \pm 0.3°$, $31.0 \pm 0.3°$, and $32.5 \pm 0.3°$.

3. The silicon nitride sintered body according to claim 1 or claim 2, further comprising titanium nitride,

the XRD analysis results satisfying $0.020 \leq (I_{36.5°} + I_{42.4°})/(I_{33.6°} + I_{36.1°}) \leq 0.050$,

$I_{36.5°}$ and $I_{42.4°}$ being maximum peak intensities corresponding to titanium nitride detected respectively at $36.5 \pm 0.3°$ and $42.4 \pm 0.3°$.

4. The silicon nitride sintered body according to claim 1 or claim 2, wherein
in the XRD analysis results, an XRD peak based on $R_3Al_5O_{12}$ crystals and an XRD peak based on $RAlO_3$ crystals are not detected, or are below a detection limit of the XRD analysis results.

5. The silicon nitride sintered body according to claim 3, wherein
in the XRD analysis results, an XRD peak based on $R_3Al_5O_{12}$ crystals and an XRD peak based on $RAlO_3$ crystals are not detected, or are below a detection limit of the XRD analysis results.

6. The silicon nitride sintered body according to claim 1 or claim 2, wherein
the silicon nitride sintered body includes:

not less than 3 mass% and not more than 7 mass% of Al; and
not less than 2 mass% and not more than 8 mass% of a rare-earth element.

7. The silicon nitride sintered body according to claim 5, wherein
the silicon nitride sintered body includes:

not less than 3 mass% and not more than 7 mass% of Al; and
not less than 2 mass% and not more than 8 mass% of a rare-earth element.

8. The silicon nitride sintered body according to claim 1 or claim 2, wherein
the silicon nitride sintered body has a content of iron within a range of not less than 10 wtppm and not more than 3,000 wtppm.

9. The silicon nitride sintered body according to claim 5, wherein
the silicon nitride sintered body has a content of iron within a range of not less than 10 wtppm and not more than 3,000 wtppm.

10. The silicon nitride sintered body according to claim 1 or claim 2, wherein
when the cross section is observed with a laser microscope, an area ratio of white regions in a measurement area of $4,000 \ \mu m \times 4,000 \ \mu m$ is not more than 70%.

11. The silicon nitride sintered body according to either claim 1 or 2, wherein

when the cross section is observed with SEM, a plurality of crystal grains having a major diameter of not less than $2.5 \ \mu m$ and an aspect ratio of not less than 2.5 are present in a measurement area of $20 \ \mu m \times 15 \ \mu m$, and a total area ratio of the plurality of crystal grains is within a range of not less than 20% and not more than 70%.

12. The silicon nitride sintered body according to claim 6, wherein

when the cross section is observed with SEM, a plurality of crystal grains having a major diameter of not less than $2.5 \ \mu m$ and an aspect ratio of not less than 2.5 are present in a measurement area of $20 \ \mu m \times 15 \ \mu m$, and a total area ratio of the plurality of crystal grains in the measurement area is within a range of not less than 20% and not more than 70%.

13. The silicon nitride sintered body according to claim 7, wherein

when the cross section is observed with SEM, a plurality of crystal grains having a major diameter of not less than 2.5 $\mu$m and an aspect ratio of not less than 2.5 are present in a measurement area of 20 $\mu$m$\times$15 $\mu$m, and a total area ratio of the plurality of crystal grains in the measurement area is within a range of not less than 20% and not more than 70%.

14. The silicon nitride sintered body according to claim 1 or claim 2, wherein
a Vickers hardness HV of the silicon nitride sintered body is not less than 1,500.

15. The silicon nitride sintered body according to claim 1 or claim 2, wherein
a fracture toughness value of the silicon nitride sintered body is not less than 6.0 MPa m$^{1/2}$.

16. A wear-resistant member using the silicon nitride sintered body according to claim 1.

17. A wear-resistant member using the silicon nitride sintered body according to claim 14.

18. The wear-resistant member according to claim 16, wherein
the wear-resistant member is a bearing ball.

FIG. 1

FIG. 2

FIG. 3

## INTERNATIONAL SEARCH REPORT

| | International application No. |
|---|---|
| | **PCT/JP2024/029706** |

**A. CLASSIFICATION OF SUBJECT MATTER**

*C04B 35/596*(2006.01)i; *F16C 19/06*(2006.01)i; *F16C 33/32*(2006.01)i
FI: C04B35/596; F16C19/06; F16C33/32

According to International Patent Classification (IPC) or to both national classification and IPC

**B. FIELDS SEARCHED**

Minimum documentation searched (classification system followed by classification symbols)

C04B35/596; F16C19/06; F16C33/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-326875 A (KABUSHIKI KAISHA TOSHIBA) 12 November 2002 (2002-11-12) entire text, all drawings | 1-18 |
| A | WO 2014/092021 A1 (KABUSHIKI KAISHA TOSHIBA) 19 June 2014 (2014-06-19) entire text, all drawings | 1-18 |
| A | JP 2001-328869 A (KABUSHIKI KAISHA TOSHIBA) 27 November 2001 (2001-11-27) entire text | 1-18 |
| A | JP 2011-144109 A (KABUSHIKI KAISHA TOSHIBA) 28 July 2011 (2011-07-28) entire text | 1-18 |
| A | WO 2009/128386 A1 (KABUSHIKI KAISHA TOSHIBA) 22 October 2009 (2009-10-22) entire text, all drawings | 1-18 |
| A | JP 2019-198895 A (KABUSHIKI KAISHA TOSHIBA) 21 November 2019 (2019-11-21) entire text, all drawings | 1-18 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 October 2024** | **22 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

| International application No. |
| --- |
| **PCT/JP2024/029706** |

**C.** **DOCUMENTS CONSIDERED TO BE RELEVANT**

| Category* | Citation of document, with indication, where appropriate, of the relevant passages | Relevant to claim No. |
| --- | --- | --- |
| A | WO 2018/030309 A1 (OSAKA UNIVERSITY) 15 February 2018 (2018-02-15)<br>entire text, all drawings | 1-18 |

Form PCT/ISA/210 (second sheet) (July 2022)

**INTERNATIONAL SEARCH REPORT**
Information on patent family members

International application No.

**PCT/JP2024/029706**

| Patent document cited in search report | | | Publication date (day/month/year) | Patent family member(s) | | | Publication date (day/month/year) |
|---|---|---|---|---|---|---|---|
| JP | 2002-326875 | A | 12 November 2002 | US | 2002/0136908 | A1 | |
| | | | | whole document, whole drawing | | | |
| | | | | EP | 1223150 | A2 | |
| WO | 2014/092021 | A1 | 19 June 2014 | CN | 104768900 | A | |
| JP | 2001-328869 | A | 27 November 2001 | US | 2002/0010068 | A1 | |
| | | | | whole document | | | |
| | | | | EP | 1134204 | A1 | |
| | | | | KR | 10-2001-0090450 | A | |
| | | | | CN | 1314323 | A | |
| JP | 2011-144109 | A | 28 July 2011 | (Family: none) | | | |
| WO | 2009/128386 | A1 | 22 October 2009 | US | 2011/0039068 | A1 | |
| | | | | whole document, whole drawing | | | |
| | | | | EP | 2266935 | A1 | |
| JP | 2019-198895 | A | 21 November 2019 | US | 2017/0297141 | A1 | |
| | | | | whole document, whole drawing | | | |
| | | | | WO | 2016/047376 | A1 | |
| | | | | EP | 3199290 | A1 | |
| | | | | CN | 106715032 | A | |
| WO | 2018/030309 | A1 | 15 February 2018 | US | 2019/0210149 | A1 | |
| | | | | whole document, whole drawing | | | |
| | | | | EP | 3498415 | A1 | |
| | | | | CN | 109562485 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5732037 B
- JP 6334413 B

- JP 5362758 B

**Non-patent literature cited in the description**

- *Toshiba Review*, 2005, vol. 60 (11), 41-44